# EUROPEAN PATENT APPLICATION

(11) **EP 3 549 705 A1**
(43) Date of publication of application: **09.10.2019**
(21) Application number: 17875829.8
(22) Date of filing: 29.08.2017
(51) Int. Cl.: B23K 1/012, B23K 1/008

(54) **HOT-AIR OXYGEN-FREE BRAZING SYSTEM**

(30) Priority: 29.11.2016 CN 201611072348; 25.05.2017 CN 201710379554; 25.08.2017 CN 201710742327
(71) Applicant: Zhang, Yue, Changsha, Hunan 410127 (CN)
(72) Inventor: Zhang, Yue, Changsha, Hunan 410127 (CN)
(74) Representative: Roberts, Peter David
(86) International application number: PCT/CN2017/099432
(87) International publication number: WO 2018/099149

(57) **Abstract**

Disclosed is a hot-air oxygen-free brazing system, including a furnace body and a hot-air circulation system. Under an oxygen-free environment, the hot-air circulation system leads gas into a working chamber of the furnace body and cyclically heats a workpiece under the condition of brazing. The hot-air oxygen-free brazing system of the present invention is good in temperature uniformity, high in brazing quality, long in service life, and wide in application range.

## Description

### Technical Field

The present invention relates to the field of brazing technologies, and particularly to a hot-air oxygen-free brazing system.

### Related Art

When brazing a workpiece, most of the existing vacuum brazing furnaces adopt a radiative-convective heating mode. This heating mode is low in heating speed, and easily leads to non-uniform heating of the workpiece, thereby generating thermal deformation, greatly increasing the defective rate, shortening the service life, and increasing the production costs. Hot-air heating modes also exist in the prior art. However, for some modes, hot-air circulation cannot be carried out, i.e., gas enters an inlet but exits from an outlet; and for some other modes, a brazing temperature is low, basically less than 450 °C, and therefore the material and structure of equipment are not highly required, so a brazing furnace is poor in universality, and can only be applied to a workpiece brazed at the temperature less than 450°C. Moreover, due to not high temperature, even if a fan is disposed in the furnace, the fan cannot be greatly affected, and therefore the structure of the fan is not highly required.

Therefore, the foregoing furnace body cannot be applied to a workpiece brazed at the temperature more than 450 °C.

### SUMMARY

In view of the foregoing disadvantages of the prior art, the present invention is directed to provide a hot-air oxygen-free brazing system that is good in temperature uniformity, long in service life, and wide in application range.

The technical solution of the present invention is as follows. A hot-air oxygen-free brazing system includes a furnace body and a hot-air circulation system. Under an oxygen-free environment, the hot-air circulation system leads gas into a working chamber of the furnace body and cyclically heats a workpiece under the condition of brazing.

Further, the hot-air circulation system is of an external circulation structure, a heating body is disposed outside the furnace body, and the heating body is connected to an inlet and an outlet of the furnace body via a circulation pipeline.

Further, the hot-air circulation system is of an internal circulation structure, a heating zone is disposed inside the furnace body, the heating zone is communicated with the working chamber, and a power device leads gas passing through the heating zone into the working chamber to form a hot-air circulation channel.

Further, the heating zone and the working chamber are disposed in a same cavity, and partitioned by a partition plate; or the heating zone and the working chamber are independent cavities, respectively.

Further, the hot-air circulation system leads gas into an inner chamber of the workpiece and heats the workpiece.

Further, the power device is a fan, the fan being disposed inside or outside the furnace body, or the fan being partially disposed inside the furnace body and partially disposed outside the furnace body.

Further, when the structure of the fan is disposed inside the furnace body partially or entirely, the fan is a high-temperature fan, the high-temperature fan includes a shaft and a main cooling body, and a part, extending into the working chamber, of the shaft is wrapped by the main cooling body.

Further, the high-temperature fan resists a temperature of not lower than 450 °C.

Further, the high-temperature fan resists a temperature of not lower than 600 °C.

Further, the main cooling body is a hollow housing made of a high-temperature-resistant material, and the part, extending into the working chamber, of the shaft penetrates through an inner chamber of the housing; or the main cooling body is a shaft seat, a shaft body inner chamber of the shaft seat is hollow, a water cooling jacket is disposed in the inner chamber of the shaft seat to form a water cooling shaft seat, and the part, extending into the working chamber, of the shaft penetrates through the inner chamber of the shaft seat.

Further, rollers are disposed in the working chamber, each roller is installed on a roller holder, and a bottom plate is placed on the rollers.

Further, a rapid cooling fan is disposed outside a furnace cover of the furnace body, the rapid cooling fan being communicated with the working chamber.

Further, a heat exchanger is disposed outside a furnace cover of the furnace body, the inner side of the furnace cover is communicated with the heat exchanger via a pipeline, and a cooling medium is fed into the pipeline.

Further, an upper part and/or lower part of a furnace cover of the furnace body are/is provided with a thermal insulation door(s).

Further, the thermal insulation door is opened electrically or adaptively.

Further, the adaptive structure is: the thermal insulation door is disposed at a cooling blowing side or a cooling suction side, and is opened by cooling blowing or suction.

Further, the furnace body includes a liner, the liner adopting an integral liner or a multi-section liner; and a thermal insulation layer is disposed on the liner.

Further, the partition plate adopts a multi-cavity grid structure; or the partition plate is of a solid or hollow structure.

Further, the rollers and/or roller holders and/or bottom plate are made of at least one of graphite, carbon-carbon, silicon carbide, corundum, molybdenum, and tungsten.

Further, the high-temperature fan is made of at least one of graphite, carbon-carbon, silicon carbide, and heat-resistant steel.

The present invention has beneficial effects as follows. (1) The surface of a workpiece and an inner chamber of the workpiece are cyclically heated by using hot air under an oxygen-free environment, so that all points of the workpiece are approximate in temperature, thereby greatly improving the quality of brazing. (2) A high-temperature fan extending into a working chamber is cooled, so that on one hand, a shaft between a main cooling body and a fan impeller can be shortened, thereby greatly improving the stability of rotation of the fan impeller, and on the other hand, a part, extending into the working chamber, of the shaft and a motor can be cooled and cannot be damaged due to over-heating, thereby greatly prolonging the service life. (3) A liner is good in thermal insulation, steady in structure, good in sealing performance and high in ductility. (4) A cooling device on a furnace cover can rapidly cool the workpiece, and all components are arranged reasonably, so that the size of a furnace body cannot be increased. (5) The hot-air oxygen-free brazing system can be applied to brazing of any workpiece.

### BRIEF DESCRIPTION OF THE DRAWINGS

FIG. 1 is a structure diagram illustrating an external circulation structure of a hot-air circulation system according to the present invention;
FIG. 2 is a structure diagram illustrating a specific implementation for an internal circulation structure of a hot-air circulation system according to the present invention;
FIG. 3 is a structure diagram illustrating another specific implementation for an internal circulation structure of a hot-air circulation system according to the present invention;
FIG. 4 is a structure diagram illustrating a partition plate according to the present invention;
FIG. 5 is a structure diagram illustrating a connection between two partition plates according to the present invention;
FIG. 6 is a structure diagram illustrating a specific implementation for a fan according to the present invention;
FIG. 7 is a structure diagram illustrating structure and internal configurations of a liner according to the present invention;
FIG. 8 is a structure diagram illustrating a furnace cover according to the present invention;
FIG. 9 is a structure diagram illustrating a specific implementation for a workpiece structure according to the present invention;
FIG. 10 is a structure diagram illustrating a workpiece adopting hot-air internal circulation according to the present invention;
FIG. 11 is a structure diagram illustrating a workpiece adopting hot-air external circulation according to the present invention; and
FIG. 12 is a structure diagram illustrating another specific implementation for a workpiece structure according to the present invention.

### DETAILED DESCRIPTION

The present invention will be further elaborated hereinbelow in conjunction with the accompanying drawings of the specification and specific embodiments.

A hot-air oxygen-free brazing system includes a furnace body and a hot-air circulation system. Under an oxygen-free environment, the hot-air circulation system leads gas into a working chamber of the furnace body and cyclically heats a workpiece under the condition of brazing.

The brazing refers to: a melting point of a solder for brazing is more than or equal to 450 °C.

The technical solution has the following advantages: (1) in the present invention, high-temperature brazing is performed in an oxygen-free environment, so that inflammable gas can be prevented from entering a working chamber to come into contact with oxygen at a high temperature to cause an explosion and the like, thereby improving safety and reducing costs; and (2) a workpiece is cyclically heated by using hot air, so that on one hand, the heating time can be shortened, and on the other hand, the workpiece can be directly filled with hot gas so as to be more uniformly heated, thereby greatly improving the quality of brazing of the workpiece.

The hot-air circulation system includes at least a power device for leading hot gas into the working chamber and a heating body for heating the gas.

The heating body may be a heater, a resistance wire, or the like.

At least a gas supply device for conveying gas to be heated, protective gas, reducing gas, or the like needs to be disposed outside the furnace body.

The structure of the hot-air circulation system will be described hereinbelow.

The hot-air circulation system may be of two structures, the first structure being an external circulation structure.

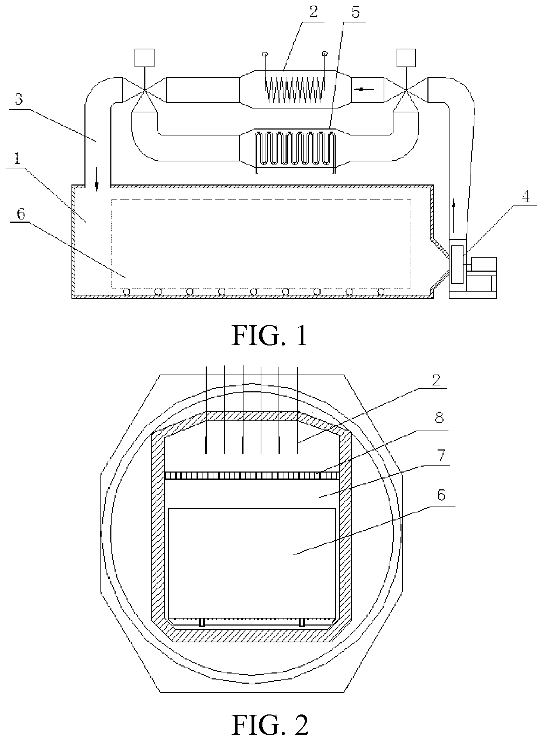

As shown in FIG. 1, a specific implementation for the external circulation structure is: a heating body 2 is disposed outside a furnace body 1, the heating body 2 is connected to an inlet and an outlet of the furnace body 1 via a circulation pipeline 3, and at least one power device 4 may be disposed at one side of the furnace body 1. The power device 4 leads gas passing through the heating body 2 into a working chamber, and the heat-exchanged gas flows from the outlet into the circulation pipeline again to cyclically heat a workpiece 6.

On the above basis, the present invention may be further provided with a cooler 5 disposed outside the furnace body, cooled gas cyclically cooling the workpiece. For example, the heating body and the cooler are connected to a circulation pipeline separately to work independently without influencing each other; or the heating body and the cooler are connected to two branches of a circulation pipeline; or the heating body and the cooler are connected to two branches of a circulation pipeline, namely a heating branch and a cooling branch, a front electrically operated valve and a rear electrically operated valve being disposed at a junction between the heating branch and the cooling branch to switch a hot gas channel and a cold gas channel.

The hot-air circulation system is set to be of the external circulation structure, so that other components or structure designs in the working chamber can be saved, the structure is greatly simplified, and the size of the furnace body may be designed to be smaller.

The second structure of the hot-air circulation system is an internal circulation structure.

A specific implementation for the internal circulation structure is: a circulation pipeline and a heating body are disposed in a working chamber, and a workpiece is cyclically heated via the circulation pipeline.

A second specific implementation for the internal circulation structure is: a heating body is disposed inside a furnace body, the heating body is communicated with a working chamber, and a power device leads gas passing through the heating body into the working chamber to form a hot-air circulation channel. Compared with the foregoing structure of arranging the circulation pipeline in the working chamber, the structure is better in effect. Requirements of high-temperature brazing for a pipeline are severe, so that the costs will be greatly increased; moreover, the structure of the working chamber will be complicated, and the circulation pipeline will affect the quality of brazing.

For example, as shown in FIG. 2, a heating body 2 and a working chamber 7 are disposed in a same cavity, and partitioned by a partition plate 8. Heated gas flows into the working chamber 7 along the partition plate 8 to heat a workpiece, and flows to the position of the heating body 2 again along the partition plate 8 to cyclically heat under the action of a power device.

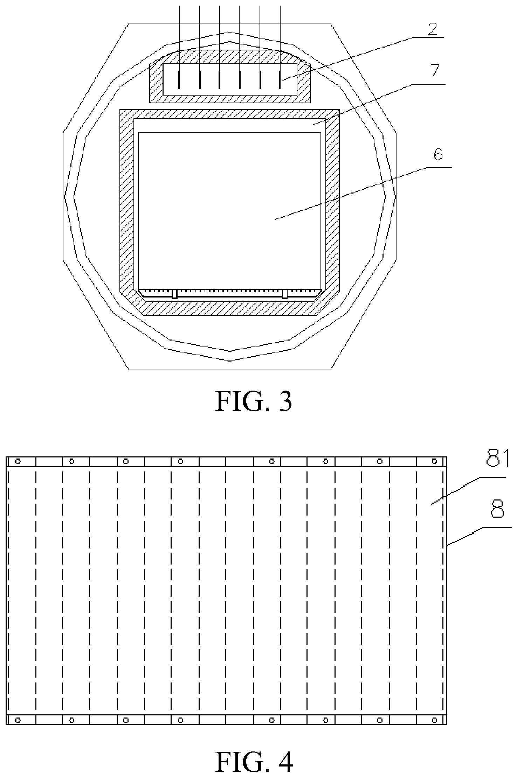

For another example, as shown in FIG. 3, a heating body 2 and a working chamber 7 are independent cavities, respectively. Heated gas flows into the working chamber 7 to heat a workpiece 6, and returns to a heating zone to cyclically heat under the action of a power device.

The situation of the partition plate will be described hereinbelow.

The working chamber is partitioned, by the partition plate, into two parts namely a heating zone and a workpiece brazing zone. The partition plate may adopt a multi-cavity grid structure, a solid structure or a hollow structure.

There may be one partition plate, or there may be a plurality of partition plates that are spliced.

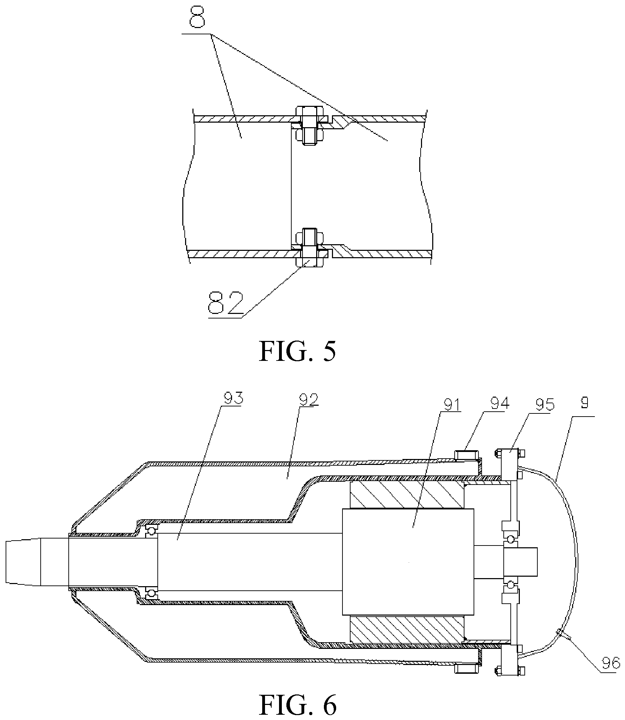

As shown in FIG. 4 and FIG. 5, a specific implementation of splicing a plurality of partition plates 8 is: each of the plurality of partition plates 8 adopts a grid structure, that is, an inner chamber of each partition plate consists of a plurality of cavities 81 arranged to form a gas channel. The end size of one partition plate 8 is reduced, so the reduced section may be sheathed in the inner chamber of another partition plate 8. A hole is provided at a connected position between every two adjacent partition plates, the holes are opposite to each other, and the adjacent partition plates are connected via a bolt 82 after a sleeved connection. The entire partition plate 8 and a liner of the furnace body are fixed via a bolt.

The partition plate may be made of a carbon-carbon material, silicon carbide, corundum, stainless steel, copper, or another high-temperature-resistant material. The surface of the partition plate is provided with a silicon carbide coating.

When the partition plate adopts the multi-cavity grid structure, a grid direction is parallel to the partition plate, and the workpiece may be placed over, below or beside the partition plate. When the workpiece is placed over the partition plate, the workpiece can be directly heated due to feeding of hot gas into grids of the partition plate, and meanwhile, hot-air circulation heating is also carried out, thereby greatly improving the brazing efficiency. When the workpiece is placed below or beside the partition plate, hot gas inside the partition plate and outside the partition plate can be led to the workpiece via a power device to perform heat circulation.

The situation of the power device will be described hereinbelow.

The power device is a fan. The fan may be an air blower, a draft fan, or the like. A fan impeller may be a centrifugal impeller, an axial-flow impeller, a diagonal-flow impeller, a mixed-flow impeller, or a multi-stage impeller.

The fan may be disposed inside or outside the furnace body, or the fan is partially disposed inside the furnace body and partially disposed outside the furnace body.

When the structure of the fan is disposed inside the furnace body partially or entirely, the fan is a high-temperature fan, a main cooling body is disposed on the high-temperature fan, and a part, extending into the working chamber, of the structure is wrapped by the main cooling body.

The high-temperature fan resists a temperature of 450°C or above. Preferably, the high-temperature fan resists a temperature of 600°C or above. More preferably, the high-temperature fan resists a temperature of 800°C or above. Further preferably, the high-temperature fan resists a temperature of 1,000°C or above. Furthermore preferably, the high-temperature fan resists a temperature of 1,500□ °C or above.

As shown in FIG. 6, a specific implementation for a fan in the present invention is: the whole fan is disposed inside a working chamber, a fan 9 includes an impeller and a motor 91 driving the impeller to act, the impeller is a centrifugal impeller, preferably, that is, the fan 9 is a high-temperature centrifugal fan. A housing of the motor 91 is provided with a water cooling jacket 92, the front end of the water cooling jacket 92 wrapping a motor shaft 93 conically. Short pipes 94 are disposed at the upper and lower parts of the water cooling jacket 92, wherein the short pipes 94 may be threading connectors or may be other connectors, and serve as a water outlet and a water inlet of the water cooling jacket. A flange 95 is disposed at the rear end of the housing of the motor, and the surface of the flange is smooth or provided with an annular groove. A rubber sealing ring is installed in the annular groove. A ventilation pipeline 96 is disposed on the motor 91, and the ventilation pipeline 96 connects the exterior of a furnace body to the interior of the motor, and can perform heat dissipation or cooling on the motor 91. The ventilation pipeline 96 may be installed on a rear cover of the motor, or may be installed on the water cooling jacket of the motor. The front end of the motor shaft is completely sleeved by the water cooling jacket, a gap being 0.1mm or above.

An installation seat of the motor 91 is fixed to the water cooling jacket 92 via an installation flange. At least one sealing groove is provided on the installation flange. A bayonet of the motor is disposed on the installation flange. Rib plates are arranged in the water cooling jacket at intervals, and the rib plates may be disposed annularly or longitudinally.

Another specific implementation for the fan in the present invention is: a motor of the fan is disposed outside a working chamber, and a part of a shaft of the motor and an impeller are located in the working chamber. A main cooling body is disposed at a position close to the fan impeller, a water cooling jacket is disposed in an inner chamber of the main cooling body, and the part, extending into the working chamber, of the shaft penetrates through the inner chamber of the main cooling body.

The main cooling body may be a shaft seat, a shaft body inner chamber of the shaft seat is hollow, a water cooling jacket is disposed in the inner chamber of the shaft seat to form a water cooling shaft seat, and the part, extending into the working chamber, of the shaft penetrates through the inner chamber of the shaft seat. Or, the main cooling body is a hollow housing made of a high-temperature-resistant material, a cooling medium is fed into an inner chamber of the housing, and the part, extending into the working chamber, of the shaft penetrates through the inner chamber of the housing.

According to the fan in the present invention, on the one hand, the main cooling body moves forward, so that the shaft between the main cooling body and the fan impeller is shortened, thereby greatly improving the stability of rotation of the fan impeller; and on the other hand, the part, extending into the working chamber, of the shaft and the motor can be cooled and cannot be damaged due to over-heating, thereby greatly prolonging the service life.

A thermal insulation layer is also disposed outside the main cooling body and is used to prevent heat in the furnace from being transferred to a water cooling jacket. The thermal insulation layer may be a high-temperature-resistant coating applied to an outer wall of the main cooling body, or may be a high-temperature-resistant thermal insulation material disposed on the outer wall of the main cooling body. A thermal insulation material may be also disposed beside the impeller. The thermal insulation material may be a carbon felt (soft felt or hard felt), the carbon felt being wrapped by a shield made of carbon-carbon/silicon carbide/corundum/molybdenum/tungsten.

The foregoing motor shaft is a solid shaft or a hollow shaft. When the motor shaft is the hollow shaft, the hollow shaft may be filled with the thermal insulation material. For example, the thermal insulation material is disposed at the end, connected to the fan impeller, of the motor shaft. Due to over-high temperature of the fan impeller at high temperature, the temperature of a junction between the shaft and the fan impeller is high, and a large temperature difference of the junction can be prevented by means of the thermal insulation material.

A fan housing and impeller of the high-temperature fan may be made of materials such as a carbon-carbon material, graphite, silicon carbide, heat-resistant steel or the like, and a fan housing substrate and an impeller substrate may adopt fiber needled green bodies or 3D knitted green bodies. The fan shaft adopts a water cooling manner. A vacuum water cooling shielded motor is adopted as the motor.

A specific implementation for the impeller is: after an entire circular ring of the impeller is made of a carbon-carbon material, fan blades are completed by machining. The fan blades, bottom plate and cover plate of the impeller are connected in an insertion manner, junctions being fastened by using pins or screwed by using threads. Fan blade, bottom plate and cover plate substrates of the impeller adopt fiber needled green bodies or 3D knitted green bodies.

The situation of the liner of the furnace body will be described hereinbelow.

The liner is disposed in the furnace body, and the foregoing working chamber is encircled by the liner. The foregoing partition plate may partition the liner into two parts. The liner adopts an integral liner or a multi-section liner, wherein sections of the multi-section liner can be connected via grooved bending plates.

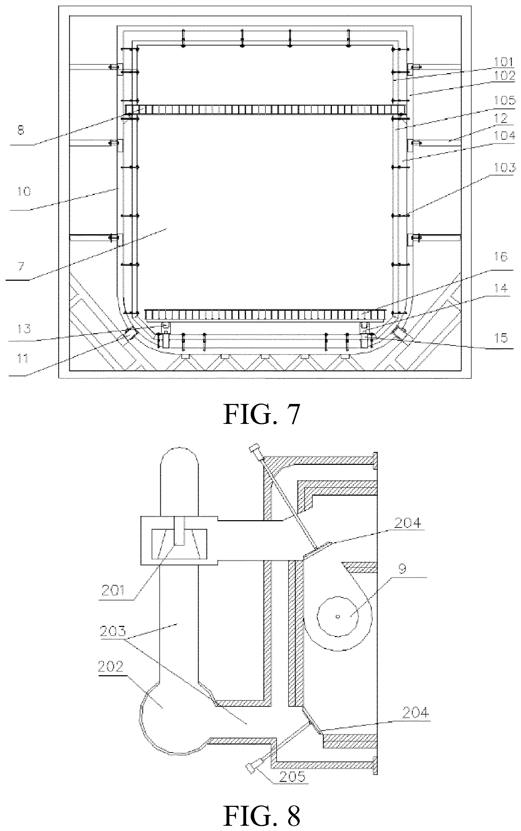

As shown in FIG. 7, a specific implementation for a liner structure is: a liner 10 is of a thermal insulation structure, and includes an inner thermal insulation shell 101, a thermal insulation layer, and an outer thermal insulation shell 102.

The inner thermal insulation shell 101 is made of one of a carbon-carbon plate, a silicon carbide plate, a corundum plate, a graphite plate, a molybdenum plate or a tungsten plate. A panel of the inner thermal insulation shell is a single-layer flat plate or a hollow grid plate. Seams of the panel are covered by a thin flat plate, and the thin flat plate is adhered to a base material by using high-temperature glue, and compressed by using a bolt 103 made of carbon-carbon, graphite, molybdenum, tungsten or silicon carbide. The shear strength of the high-temperature glue is greater than 5MPa.

The thermal insulation layer includes a ceramic wool layer 104 and a carbon felt layer 105, the carbon felt layer 105 being an inner layer, and the ceramic wool layer 104 being an outer layer. The ceramic wool layer 104 may be replaced with an aluminum silicate wool layer.

The outer thermal insulation shell 102 is made of one of stainless steel, carbon steel or low-alloy steel. The surface of the outer thermal insulation shell 102 is provided with a plurality of convex or concave holes. A steel plate of the outer thermal insulation shell 102 is connected to two sides of the holes to form a ripple-like telescopic structure.

Outer rollers 11 are installed at the lower part of the liner, the outer rollers 11 being placed on a track of a furnace body 1. The upper part of the liner is connected to a furnace top, a gap being reserved between the upper part of the liner and the furnace top.

The liner 10 is connected to the furnace body 1 via a supporting frame 12; or the liner is connected to the furnace body via a cross bar by the supporting frame, a groove is provided on the cross bar, and a connecting bolt is installed in the groove.

The situation of internal configurations of the liner will be described hereinbelow.

As shown in FIG. 7, rollers 13 are disposed in an inner chamber, namely a working chamber, of the liner 10.

A specific implementation for a roller structure is: a roller 13 is installed on a roller holder 14. The roller holder 14 is installed on a supporting column 15, the supporting column 15 is installed in a sleeve with threads, the threads are screwed in a base, and the base is fixed to a liner 10. A shaft extends out of the roller 13, the shaft is inserted into a bearing, and the bearing is fixed to a bearing block. The diameter of the roller 13 is greater than the outer diameter of the bearing.

The roller, the bearing and the bearing block are all made of one of carbon-carbon, silicon carbide or corundum. Both the roller holder and the supporting column are made of one of graphite, carbon-carbon, silicon carbide, corundum, molybdenum or tungsten.

A bottom plate 16 is placed on the roller 14, and a workpiece may be placed on the bottom plate 16 for pushing a workpiece in and out under the driving of the roller. The bottom plate is made of one of graphite, carbon-carbon, silicon carbide, corundum, molybdenum or tungsten. The bottom plate 16 may be of a multi-cavity grid structure, a solid structure or a hollow structure; or the bottom plate is of a solid or hollow structure, and a multi-cavity grid structure plate is placed on the solid or hollow bottom plate. There may be one bottom plate 16, or there may be a plurality of partition plates that is spliced. The upper and lower surfaces of the bottom plate are smooth.

A specific implementation of splicing a plurality of bottom plates is: the end size of one bottom plate is reduced, so the reduced section may be sheathed in an inner chamber of another bottom plate. A hole is provided at a connected position between every two adjacent bottom plates, the holes are opposite to each other, and the adjacent bottom plates are connected via a bolt after a sleeved connection. Both the inner and outer surfaces of the bottom plate are provided with a silicon carbide coating separately.

The structure of a furnace cover will be described herein below.

A furnace cover is connected to at least one end of the furnace body, a cooling device is disposed on the furnace cover, and the cooling device can cool the working chamber. When furnace covers are disposed on both ends of the furnace body, a cooling device may be disposed on one of the furnace covers.

A specific implementation for the cooling device is: a rapid cooling fan is disposed outside the furnace cover, and the rapid cooling fan is communicated with the working chamber in the furnace body via a pipeline. The furnace cover is provided with a thermal insulation door, the thermal insulation door being disposed at a blowing side of the rapid cooling fan. When the rapid cooling fan is not started, the thermal insulation door is not opened. Only when the rapid cooling fan is operating, the thermal insulation door can be blown to be opened, so that external wind is conveyed to the working chamber, thereby cooling the brazed workpiece to make temperature reduced.

A second specific implementation for the cooling device is: a heat exchanger is installed outside the furnace cover, the heat exchanger is of a tube-shell type structure, the tube is filled with water, and gas needing to be cooled passes through the shell. A water cooling jacket or a winding coil is disposed outside the heat exchanger. The interior of the furnace body is communicated with the heat exchanger via a pipeline, the pipeline being a water cooling jacket pipe. The furnace cover is provided with a thermal insulation door, the thermal insulation door being opened by using an electric switch. After the thermal insulation door is opened, water in the heat exchanger and water in the water cooling jacket pipe cool passing gas, and the cooled gas enters the working chamber to cool the workpiece to make temperature reduced.

As shown in FIG. 8, a third specific implementation for the cooling device is: a rapid cooling fan 201 and a heat exchanger 202 are disposed outside a furnace cover 20 simultaneously, the rapid cooling fan 201, the heat exchanger 202 and the working chamber are communicated via a pipeline, a pipeline 203 between the rapid cooling fan 201 and the heat exchanger 202 is not provided with a water cooling jacket, and the pipeline 203 between the heat exchanger 202 and the working chamber is a water cooling jacket pipe. The furnace cover 20 is provided with two thermal insulation doors 204, one of the thermal insulation doors 204 is disposed between the rapid cooling fan 201 and an inner chamber of the furnace body 1, and the other thermal insulation door 204 is disposed between the heat exchanger 202 and the inner chamber of the furnace body 1. The two thermal insulation doors are disposed at a blowing side of the rapid cooling fan 201 and a suction side of a fan 9 in the furnace. The fan 9 is a high-temperature centrifugal fan. When the fan 9 operates to heat a workpiece, none of the two thermal insulation doors 204 can be automatically opened. Only when the rapid cooling fan 201 operates, the thermal insulation doors 204 can be opened. Thus, water in the heat exchanger 202 and water in water cooling jacket pipe cool passing gas, and the cooled gas is rapidly conveyed into the working chamber via the rapid cooling fan 201 to cool the workpiece to make temperature reduced.

The thermal insulation doors 204 may be further provided with electric switches 205, the thermal insulation doors being opened by using the electric switches.

The structure of a thermal insulation door will be described herein below.

As shown in FIG. 8, a thermal insulation door 204 is connected to a door frame via a hinge, the hinge being disposed above the center of gravity of the thermal insulation door 204. The thermal insulation door keeps close to the door frame under a free state. When the thermal insulation door is disposed at the blowing side of the rapid cooling fan, the door frame is disposed behind the thermal insulation door; and when the thermal insulation door is disposed at the suction side of the rapid cooling fan, the door frame is disposed in front of the thermal insulation door.

The door frame is provided with a sealing strip. The sealing strip is made of a flexible material which may be a soft felt, ceramic wool felt or an aluminum silicate felt. The sealing strip is clamped into a C-shaped clamping groove of the door frame in a Ω shape, preferably. The C-shaped clamping groove may be made of stainless steel, carbon-carbon, silicon carbide or the like. The sealing strip and the C-shaped clamping groove are disposed at a low-temperature end of a high-temperature sealing face of the door frame. The other face of the door frame is provided with a high-temperature material such as a soft felt, ceramic wool felt or an aluminum silicate felt.

The amount of compression of the sealing strip is 10% or above.

The situation of brazing of a workpiece will be described hereinbelow.

The workpiece is of a structure enabling gas to flow into it and to flow out of it, and a power device leads hot gas or cold gas into an inner chamber of the workpiece via a circulation pipeline to cyclically heat or cool the workpiece.

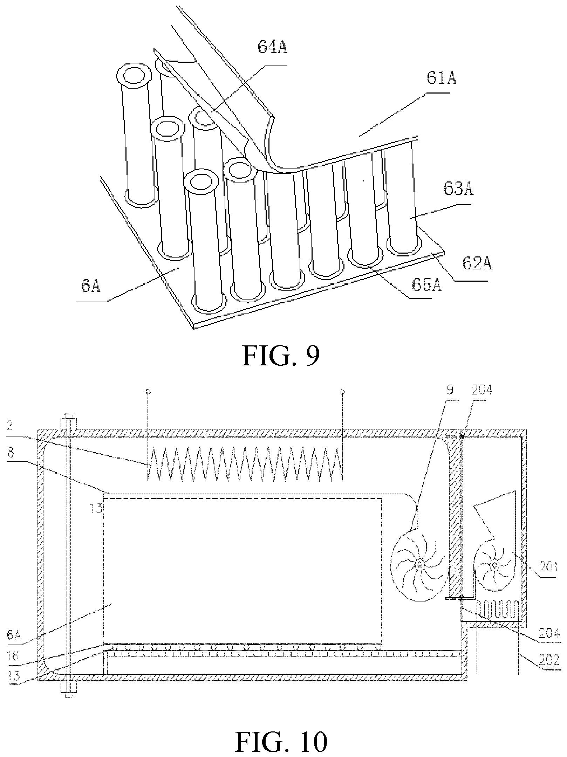

As shown in FIG. 9, a specific implementation for a workpiece structure is: a workpiece 6A includes a first panel 61A, a second panel 62A and a plurality of core tubes 63A disposed therebetween.

The section of the core tube 63A is round or N-polygonal, where N≥3. Or, the section is specially-shaped such as angular, I-shaped, concave or the like. The core tubes in the present embodiment are circular tubes, preferably. The plurality of core tubes 63A is arranged to form a through gas channel, copper solders 64A are disposed between the core tubes 63A and the panels. The upper and lower ends of the core tube are provided with flanges 65A.

As shown in FIG. 10, a specific implementation for hot-air internal circulation of the above workpiece is: a workpiece 6A is disposed on a bottom plate 16 at the upper side of a roller 13, and the roller 13 is disposed on a track. A heating body 2 and a working chamber 7 are partitioned by a partition plate 8. Both the bottom plate 16 and the partition plate 8 are of a multi-cavity grid structure. The bottom plate 16 and the partition plate 8 are placed in parallel to a furnace body, and a flowing direction of gas in grids is also parallel to the furnace body. During brazing, protective gas is led to a heating zone by a fan 9, the fan 9 being a high-temperature centrifugal fan. The gas is heated into hot gas by the heating body 2, some entering the working chamber 7 along the partition plate, some entering a grid chamber of the partition plate 8, and some entering a grid chamber of the bottom plate 16. Thus, the surface of a first panel, the surface of a second panel and a cavity between the two panels are heated by the hot gas, high-temperature gas runs through an inner chamber of the workpiece and comes into contact with each core tube, so the upper, lower, left, right, front and rear ends of the workpiece are approximate in temperature, thereby greatly improving the temperature uniformity. Thus, the workpiece 6A cannot deform due to heat difference. After brazing is completed, the fan 9 and the heating body 2 are closed, a rapid cooling fan 201 is opened, the rapid cooling fan 201 blows to open a thermal insulation door 204, water in a heat exchanger 202 and water in a water cooling jacket pipe cool passing gas, the cooled gas is led into the furnace body by the rapid cooling fan 201, some of cold gas enters the working chamber 7 along the bottom plate 16, some gas enters the grid chamber of the bottom plate 16, and some gas enters the grid chamber of the partition plate 8. Thus, the upper, lower, left, right, front and rear ends of the workpiece 6A are approximate in temperature, thereby uniformly cooling the workpiece, improving the quality of brazing, and cooling the partition plate and the bottom plate.

A specific implementation for hot-air external circulation of a workpiece is as follows.

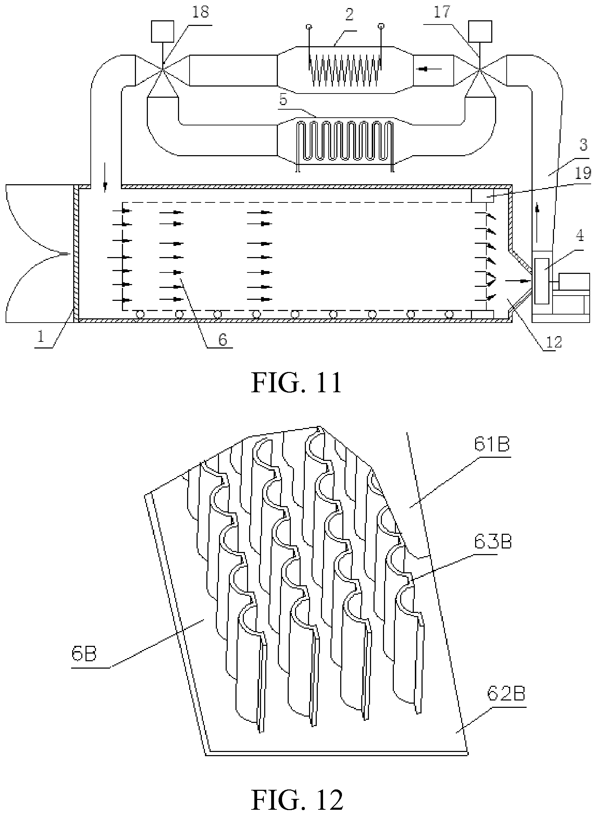

As shown in FIG. 11, a heating body 2 and a cooler 5 are disposed outside a furnace body 1, the heating body 2 and the cooler 5 are connected to an inlet and an outlet of the furnace body 1 via a circulation pipeline 3, the heating body 2 and the cooler 5 are connected to two branches of a circulation pipeline, namely a heating branch and a cooling branch, a front electrically operated three-way valve 17 and a rear electrically operated three-way valve 18 are disposed at a junction between two ends of the heating branch and the cooling branch to switch a hot gas channel and a cold gas channel, and the openness of the front electrically operated three-way valve 17 and the rear electrically operated three-way valve 18 is adjustable, so that the flow of gas can be adjusted.

Thermal insulation layers are provided on the inner sides of housings of the front electrically operated three-way valve 17 and the rear electrically operated three-way valve 18 respectively, and the thermal insulation layers are made of carbon felts, so that gas entering the housings is in direct contact with the thermal insulation layers, instead of the housings, for heat exchange, thereby ensuring the temperature of the gas.

A power device 4 such as a draft fan is disposed between the rear side of the outlet of the furnace body and the circulation pipeline, and forcedly performs gas circulation, and the flowing speed of the gas can be controlled via the rotating speed of the draft fan.

The heating body 2 can heat the gas into hot gas, the cooler 5 can cool the gas into cold gas, and the hot gas or the cold gas is led into a furnace chamber along the circulation pipeline via the draft fan and flows into the inner chamber of the workpiece 6. Baffles 19 are disposed between the upper and lower sides of the end, close to the outlet, of the workpiece 6 and the working chamber, and the baffles 19 can seal a gap between the workpiece 6 and the outlet, so as to ensure that the gas can only flow to the outlet from the inner chamber of the workpiece 6 and cannot flow out from the upper and lower sides of the workpiece 6. Thus, the defective rate can be greatly reduced. The gas flows into the circulation pipeline 3 via the outlet to form a circulation channel.

As shown in FIG. 12, a specific implementation for the workpiece structure is: a workpiece 6B includes a first panel 61B, a second panel 62B and a plurality of core plates 63B disposed therebetween.

The core plate 63B may be one of a wavy core plate, a corrugated core plate, a rib core plate, a straight core plate, a grid core and a honeycomb core, or any combination thereof; or the core plate consists of two symmetric wavy core plates, corrugated core plates or rib core plates, and two core plates are connected into a whole face to face or back to back; or the grid core includes a plurality of triangular or quadrangular grid channels; and the honeycomb core includes a plurality of N-polygonal grid channels, where 5≤N≤30. The core plates in the present embodiment are wavy core plates, preferably. The plurality of core plates is arranged to form a through gas channel. Copper solders are disposed between the core plates 63B and the panels.

In the present invention, the water cooling jacket is disposed on the furnace body, and can cool the furnace body. The furnace body can bear a high pressure, brazing is performed under the pressure of 0.1MPa or above, the pressure is measured by a pressure gage, and the furnace pressure is controlled by controlling the openness ratio of an inlet valve to an exhaust valve. The atmosphere of brazing is hydrogen and nitrogen, the content of the hydrogen is 50% or above, the nitrogen enables the workpiece to be under an oxygen-free environment in a brazing process, and the hydrogen protects the workpiece from being oxidized in the brazing process.

Apparently, a person skilled in the art can make various changes and modifications on the present invention without departing from the spirit and scope of the present invention. Thus, if these changes and modifications for the present invention fall within the scope of claims of the present invention and equivalent technologies thereof, the present invention also contains these changes and modifications.

## Claims

1. A hot-air oxygen-free brazing system, comprising a furnace body and a hot-air circulation system, wherein under an oxygen-free environment, the hot-air circulation system leads gas into a working chamber of the furnace body and cyclically heats a workpiece under the condition of brazing.

2. The hot-air oxygen-free brazing system according to claim 1, wherein the hot-air circulation system is of an external circulation structure, a heating body is disposed outside the furnace body, and the heating body is connected to an inlet and an outlet of the furnace body via a circulation pipeline.

3. The hot-air oxygen-free brazing system according to claim 1, wherein the hot-air circulation system is of an internal circulation structure, a heating zone is disposed inside the furnace body, the heating zone is communicated with the working chamber, and a power device leads gas passing through the heating zone into the working chamber to form a hot-air circulation channel.

4. The hot-air oxygen-free brazing system according to claim 3, wherein the heating zone and the working chamber are disposed in a same cavity, and partitioned by a partition plate; or the heating zone and the working chamber are independent cavities, respectively.

5. The hot-air oxygen-free brazing system according to any one of claims 1 to 4, wherein the hot-air circulation system leads gas into an inner chamber of the workpiece and heats the workpiece.

6. The hot-air oxygen-free brazing system according to any one of claims 2 to 4, wherein the power device is a fan, the fan being disposed inside or outside the furnace body, or the fan being partially disposed inside the furnace body and partially disposed outside the furnace body.

7. The hot-air oxygen-free brazing system according to claim 6, wherein when the structure of the fan is disposed inside the furnace body partially or entirely, the fan is a high-temperature fan, the high-temperature fan comprises a shaft and a main cooling body, and a part, extending into the working chamber, of the shaft is wrapped by the main cooling body.

8. The hot-air oxygen-free brazing system according to claim 7, wherein the high-temperature fan resists a temperature of 450°C or above.

9. The hot-air oxygen-free brazing system according to claim 7, wherein the high-temperature fan resists a temperature of 600°C or above.

10. The hot-air oxygen-free brazing system according to claim 7, wherein the main cooling body is a hollow housing made of a high-temperature-resistant material, and the part of the shaft which extends into the working chamber penetrates through an inner chamber of the housing; or the main cooling body is a shaft seat, a shaft body inner chamber of the shaft seat is hollow, a water cooling jacket is disposed in the inner chamber of the shaft seat to form a water cooling shaft seat, and the part, extending into the working chamber, of the shaft penetrates through the inner chamber of the shaft seat.

11. The hot-air oxygen-free brazing system according to any one of claims 1 to 4, wherein rollers are disposed in the working chamber, each roller is installed on a roller holder, and a bottom plate is placed on the rollers.

12. The hot-air oxygen-free brazing system according to any one of claims 1 to 4, wherein a rapid cooling fan is disposed outside a furnace cover of the furnace body, the rapid cooling fan being communicated with the working chamber.

13. The hot-air oxygen-free brazing system according to any one of claims 1 to 4, wherein a heat exchanger is disposed outside a furnace cover of the furnace body, the inner side of the furnace cover is communicated with the heat exchanger via a pipeline, and a cooling medium is fed into the pipeline.

14. The hot-air oxygen-free brazing system according to any one of claims 1 to 4, wherein an upper part and/or lower part of a furnace cover of the furnace body are/is provided with a thermal insulation door(s).

15. The hot-air oxygen-free brazing system according to claim 14, wherein the thermal insulation door is opened electrically or adaptively.

16. The hot-air oxygen-free brazing system according to claim 15, wherein the adaptive structure is such that the thermal insulation door is disposed at a cooling blowing side or a cooling suction side, and is opened by cooling blowing or suction.

17. The hot-air oxygen-free brazing system according to any one of claims 1 to 4, wherein the furnace body comprises a liner, the liner adopting an integral liner or a multi-section liner; and a thermal insulation layer is disposed on the liner.

18. The hot-air oxygen-free brazing system according to claim 4, wherein the partition plate adopts a multi-cavity grid structure; or the partition plate is of a solid or hollow structure.

19. The hot-air oxygen-free brazing system according to claim 11, wherein the rollers and/or roller holders and/or bottom plate are made of at least one of graphite, carbon-carbon, silicon carbide, corundum, molybdenum, and tungsten.

20. The hot-air oxygen-free brazing system according to claim 7, wherein the high-temperature fan is made of at least one of graphite, carbon-carbon, silicon carbide, and heat-resistant steel.
